Europäisches Patentamt

European Patent Office

Office européen des brevets

(11) Numéro de publication: **0 203 841**
**B1**

(12) # FASCICULE DE BREVET EUROPEEN

(45) Date de publication du fascicule du brevet:
25.07.90

(51) Int. Cl.⁵: **F16D 55/224**

(21) Numéro de dépôt: 86400975.8

(22) Date de dépôt: 06.05.86

(54) **Ressort pour frein à disque.**

(30) Priorité: **22.05.85 FR 8507708**

(43) Date de publication de la demande:
**03.12.86 Bulletin 86/49**

(45) Mention de la délivrance du brevet:
**25.07.90 Bulletin 90/30**

(84) Etats contractants désignés:
**DE GB IT**

(56) Documents cités:
**EP-A- 0 002 399**
**EP-A- 0 030 502**
**EP-A- 0 059 128**
**EP-A- 0 106 718**
**FR-A- 2 408 766**
**FR-A- 2 437 528**
**FR-A- 2 448 071**
**GB-A- 1 532 572**
**GB-A- 2 056 601**

(73) Titulaire: **BENDIX France, 126, rue de Stalingrad,
F-93700 Drancy(FR)**

(72) Inventeur: **Gerard, Jean-Louis, 129 Bd Massena,
F-75013 Paris(FR)**
Inventeur: **Le Marchand, Claude, 8 Allée des Tilleuls,
F-95330 Domont(FR)**

(74) Mandataire: **Timoney, Ian Charles Craig, BENDIX
FRANCE Division Technique Service Brevets Bendix
Europe 126, rue de Stalingrad, F-93700 Drancy(FR)**

ACTORUM AG

## Description

L'invention a pour objet un ressort pour frein à disque à étrier coulissant ainsi qu'un frein à disque équipé d'un tel ressort.

L'invention vise plus particulièrement un ressort à fonctions multiples destiné à équiper un frein à disque dont l'étrier coulisse par rapport à un support fixe au moyen d'au moins deux surfaces complémentaires de coulissement axial formées sur l'étrier et sur le support fixe et qui sont maintenues en contact par des moyens élastiques.

Parmi les freins à disque du type mentionné ci-dessus, on connaît les freins à disque dont l'étrier est monté coulissant par rapport au support fixe au moyen d'une colonnette axiale reçue en coulissement dans un alésage correspondant et au moyen de deux surfaces de coulissement formées en vis-à-vis sur l'étrier et sur le support fixe. Un tel frein est décrit et représenté dans le brevet GB-A-1 532 572. Dans un tel frein, il est nécessaire de prévoir des moyens élastiques pour maintenir lesdites surfaces en contact ainsi que des ressorts anti-bruit destinés à plaquer les organes de friction en appui dans l'ouverture prévue dans le support fixe pour les recevoir. Le document EP - A - 0 030 502 propose d'utiliser un ressort unique disposé entre l'étrier et les organes de friction assurant la double fonction de maintien en contact desdites surfaces de coulissement et de ressort anti-bruit pour les organes de friction.

Il existe également des freins à disque dont l'étrier est monté coulissant sur le support fixe au moyen de deux paires de surfaces de coulissement complémentaires formées respectivement sur l'étrier et sur le support fixe, lesdites paires de surfaces de coulissement étant maintenues en contact au moyen de deux ressorts disposés de part et d'autre du plan axial médian du frein. Un tel frein est décrit et représenté dans le document FR-A-2 408 766. Dans un tel frein, il est de plus nécessaire de prévoir des ressorts anti-bruit pour les organes de friction afin de plaquer ces derniers en appui dans l'ouverture du support fixe dans laquelle ils sont reçus.

Dans les freins qui viennent d'être décrits, il peut être souhaitable de monter un type particulier d'organes de friction auquel il est nécessaire d'appliquer un effort tangentiel permanent, sollicitant ces organes de friction en appui dans l'ouverture du support fixe dans une position latérale préférentielle. Un tel type d'organes de friction est décrit et représenté dans le document EP-A-0 002 399. On constate à la lecture de ce document qu'il est nécessaire de prévoir pour chacun des organes de friction un ressort indépendant sollicitant chaque organe dans sa position latérale préférentielle ainsi que les deux ressorts de maintien de l'étrier mentionné plus haut.

La demande de Modèle d'Utilité japonais N° 54-088653 U publié le 21 JANVIER 1981, sous le N° JP-U-56-7130 (et correspondant au document GB - A - 2 056 601) décrit un ressort pour frein à disque monté dans un logement sous la voûte de l'étrier et coopérant avec les organes de friction pour solliciter ceux-ci radialement et tangentiellement afin d'assurer leur maintien dans une position latérale préférentielle. Dans ce document, le ressort présente une forme générale de V très ouvert à rebords d'extrémité et est arc-bouté latéralement contre deux parois opposées du logement de voûte. Cet agencement se révèle donc sensible aux variations des dimensionnements du ressort et du logement de voûte ainsi qu'aux variations de tolérance des positions respectives des organes de friction et de l'étrier.

Le problème technique de la présente invention est de proposer l'agencement de freins à disque avec un ressort assurant les fonctions de ressort anti-bruit et de maintien en position latérale préférentielle des organes de friction, de structure simplifiée, compacte et robuste, peu sensible aux problèmes de tolérance, et assurant une action élastique améliorée sur les organes de friction, en assurant élastiquement le contact entre deux surfaces complémentaires de coulissement axial.

De plus, l'invention propose une structure qui permet d'adapter l'effort radial et l'effort tangentiel indépendamment l'un de l'autre selon les besoins d'utilisation du ressort sur différents types de frein.

Ce problème est résolu conformément à l'invention par un ressort pour frein à disque du type comportant un étrier monté coulissant parallèlement à l'axe d'un disque tournant, sur un support fixe au moyen d'au moins deux surfaces de coulissement axial formées sur l'étrier et sur le support fixe et maintenues élastiquement en contact, et deux organes de friction reçus en ancrage et en coulissement axial dans une ouverture dudit support fixe pour venir en engagement de friction avec les faces opposées dudit disque, lors de l'actionnement d'un moteur de frein, ledit ressort étant monté élastiquement dans une ouverture formée dans la voûte de l'étrier et exerçant sur les plaques support desdits organes de friction, un effort radial dirigé sensiblement selon un rayon du disque, et en direction de l'axe de ce dernier et un effort tangentiel perpendiculaire audit effort radial pour solliciter chacun des organes de friction tangentiellement à la circonférence dudit disque pour assurer le maintien de ces derniers dans une position latérale préférentielle, ledit ressort étant constitué d'une lame métallique pliée comportant une portion de montage et des portions d'action. Selon l'invention, la portion de montage est centrale et reliée élastiquement par ses côtés circonférentiellement espacés à deux portions d'action rigide, une première portion rigide s'étendant parallèlement à l'axe du disque et susceptible de solliciter élastiquement par ses deux extrémités libres lesdites plaques support dans une direction sensiblement circonférentielle, une deuxième desdites portions rigides s'étendant également parallèlement à l'axe du disque et susceptible de solliciter élastiquement par ses deux extrémités libres lesdites plaques support sensiblement radialement vers l'axe du disque.

Avec un tel agencement, le ressort maintenu par sa portion de montage dans l'ouverture formée dans la voûte de l'étrier sollicite par chacune de ses portions rigides la plaque support, les liaisons élastiques entre la portion de montage et chacune des deux portions d'action rigide peut être modifiée à volonté pour obtenir les efforts radiaux et tangentiels voulus.

On décrira maintenant, à titre d'exemple, un ressort réalisé selon les enseignements de la présente invention, ainsi que son application à un frein à disque, en se référant aux dessins annexés, dans lesquels :

- La Figure 1 représente un frein à disque muni d'un ressort réalisé selon la présente invention;
- La Figure 2 est une vue en coupe partielle selon la ligne II-II de la Figure 1;
- La Figure 3 est une vue en coupe, selon la ligne III-III de la Figure 1;
- La Figure 4 est une vue agrandie en perspective, montrant la coopération du ressort avec les éléments de friction;
- La Figure 5 est une vue agrandie d'un détail de la Figure 2 représentant l'implantation du ressort dans la voûte de l'étrier du frein à disque de la Figure 1;
- La Figure 6 est une vue similaire à la Figure 1 pour un autre type de frein;
- La Figure 7 est une vue en coupe partielle, selon la ligne VII-VII de la Figure 6.

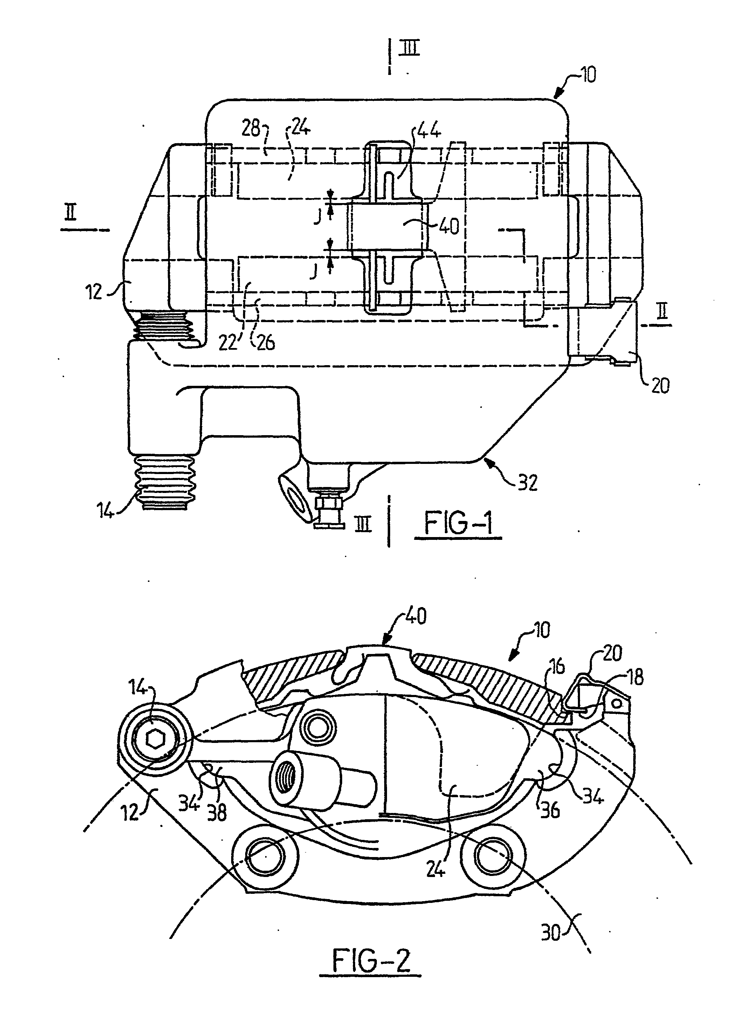

Le frein à disque représenté aux Figures 1 à 3 est du type comportant un étrier 10, monté coulissant sur un support fixe 12, au moyen d'une colonnette axiale 14. Le coulissement de l'étrier 10 par rapport au support fixe 12 est également assuré au moyen de surfaces de coulissement axial 16 et 18, formées respectivement sur l'étrier 10 et sur un ressort 20 solidaire du support fixe 12. Le frein à disque comporte en outre deux organes de friction 22 et 24, munis respectivement de plaques support 26 et 28, susceptibles de venir en engagement de friction avec un disque tournant 30, lors de l'actionnement d'un moteur hydraulique de frein 32. Les organes de friction 22 et 24 sont reçus en ancrage et en coulissement dans une ouverture 34 formée dans le support fixe 12. Dans l'exemple représenté, les deux organes de friction 22 et 24 ont des extrémités 36 et 38 possédant un profil circulaire coopérant avec des profils circulaires complémentaires de l'ouverture 34. Un tel type d'organes de friction est décrit et représenté plus en détail dans le brevet Européen EP-A-0 002 399. Pour ce type d'organes de friction, il est souhaitable d'exercer sur la plaque support un effort tangentiel qui maintienne cette dernière dans une position latérale préférentielle, en appui dans l'ouverture ménagée dans le support fixe 12.

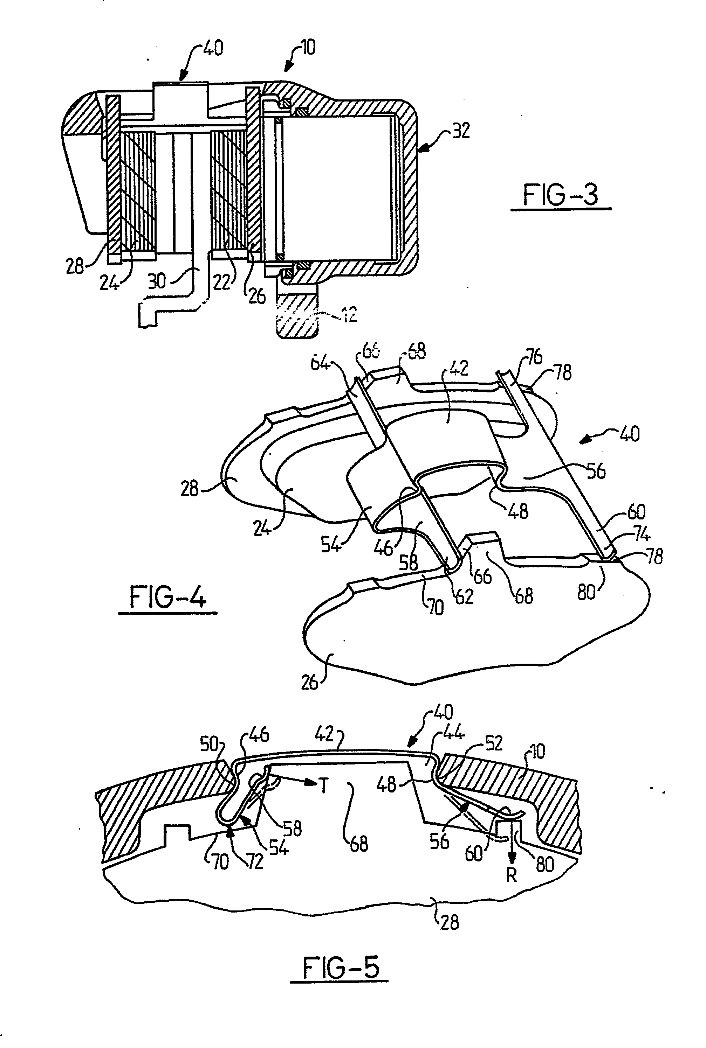

Le frein à disque représenté aux Figures 1 à 3 est muni d'un ressort 40 réalisé selon la présente invention. Pour la description du ressort 40, on se reportera notamment aux Figures 4 et 5. Le ressort 40 est constitué d'une lame métallique pliée qui comprend une portion de montage 42 ayant la forme générale de la lettre grecque Ω montée élastiquement dans une ouverture 44 formée dans la voûte de l'étrier 10. Les côtés circonférentiellement espacés 46 et 48 formant les parties resserrées de la lettre Ω coopèrent avec des bords circonférentiellement espacés 50 et 52 de l'ouverture 44. Les côtés circonférentiellement espacés 46 et 48 sont prolongés par des portions élastiques 54 et 56 respectivement. Ces portions élastiques 54 et 56 se terminent par deux portions rigides 58 et 60 qui s'étendent axialement de part et d'autres de la portion élastique correspondante 54 ou 56. Une première portion rigide 58 associée à la portion élastique 54 présente deux extrémités libres 62 et 64 qui sollicitent chacune des plaques support 26, 28 sensiblement circonférentiellement par coopération avec des surfaces d'appui 66 formées sur le flan d'une saillie 68 formée sur le côté périphérique 70 de chacune des plaques support 26 et 28. Comme on le voit sur les Figures 4 et 5, la portion rigide 58 a la forme d'une gouttière, la portion élastique 54 correspondante formant un pli prononcé 72 de manière à permettre à la portion rigide 58 de solliciter la saillie 68 en dehors de la zone occupée par les éléments de friction et par le disque. D'une façon similaire, la portion rigide 60 a la forme d'une gouttière et comporte deux extrémités libres 74 et 76 qui coopèrent avec des surfaces d'appui 78 qui s'étendent sensiblement circonférentiellement sur des saillies 80 formées sur le côté périphérique 70 des plaques support 26 et 28. En se reportant à la Figure 5, on voit que la première portion rigide 58, grâce au pli 72, exerce sur la saillie 68 un effort sensiblement tangentiel T, d'une façon similaire, la deuxième portion rigide 60 exerce sur la saillie 80, un effort sensiblement radial R. On a représenté en pointillés sur la Figure 5 la position des portions rigides 58 et 60 lorsque le ressort 40, monté dans l'ouverture 44, ne sollicite pas les éléments de friction 22 et 24. On voit, en particulier en ce qui concerne la portion élastique 56, que celle-ci épouse le bord 52 de l'ouverture 44, et ceci d'autant plus que la portion rigide 60 est sollicitée vers le haut de la Figure 5 par la saillie 80. On obtient ainsi une raideur variable de la portion élastique 56 selon une loi qui dépend de la rigidité de la portion élastique 56 et du contact progressif de cette portion avec le bord 52 de l'étrier 10.

Par réaction à l'effort R appliqué sur la saillie 80, le pli 48 du ressort 40 exerce sur le bord 52 de l'étrier 10 un effort vers le haut en ce se référant à la Figure 5, cet effort de réaction maintient en contact les surfaces de coulissement 16 et 18 telles que représentées sur la Figure 2.

On comprend que grâce à l'invention, le ressort 40 est maintenu dans l'ouverture 44 de la voûte de l'étrier 10 par sa portion en Ω et ne risque pas d'être détérioré lors du démontage et du remontage des éléments de friction, par exemple; de plus, la structure du ressort, objet de l'invention, permet aisément par changement de forme des portions élastiques 54 et 56 de modifier selon les besoins les valeurs des efforts tangentiel T et radial R indépendamment l'une de l'autre. En se reportant à la Figure 1 on voit que de part et d'autre du ressort 40, l'ouverture de voûte 44 présente des portions réduites de manière à immobiliser axialement le ressort 40 par rapport à l'étrier 10, ceci en ménageant un jeu J entre les bords axialement espacés de la portion de montage 42 et les bords de la portion élargie de l'ouverture 44. La valeur du jeu J représentée sur la Figure 1 est considérablement augmentée de façon à la rendre visible.

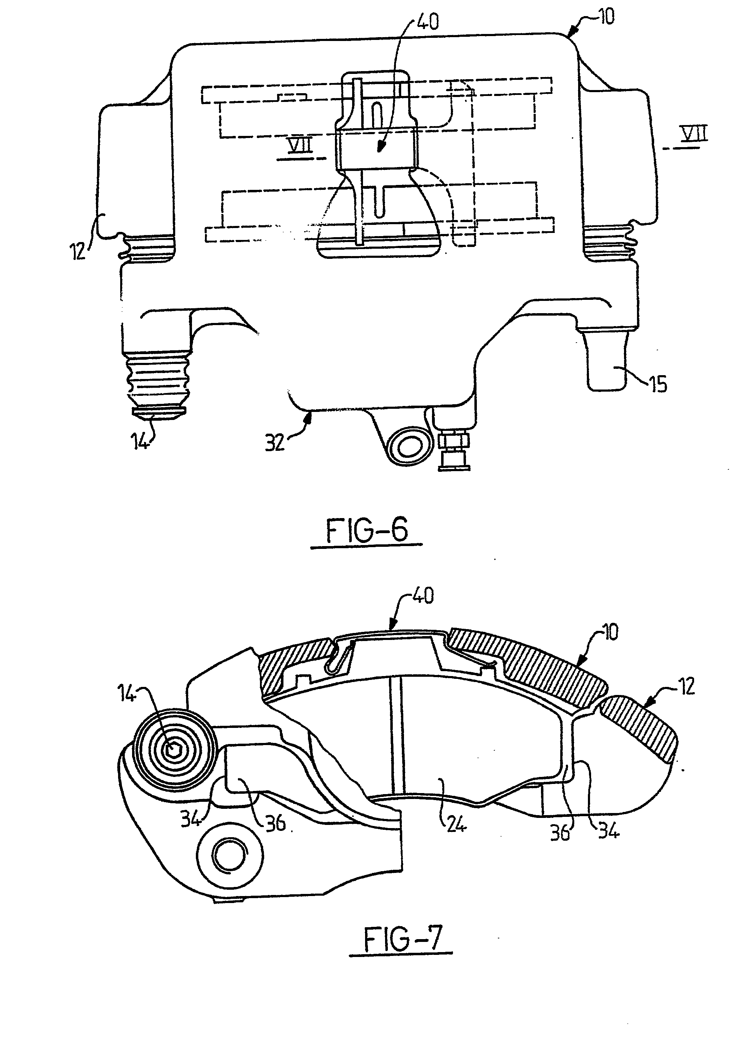

Sur les Figures 6 et 7, on a représenté un autre type de frein équipé du ressort, objet de l'invention. On notera que les mêmes éléments portent les mêmes références, lorsqu'ils remplissent la même fonction que celle remplie pour le premier type de frein. La description étant la même que pour le premier type de frein, on se reportera avantageusement à celle-ci, nous ne mentionnerons à l'occasion des Figures 6 et 7 que les différences par rapport au premier type de frein. Le frein des Figures 6 et 7 comporte une deuxième colonnette 15 de coulissement axial de l'étrier 10 sur le support fixe 12, le diamètre intérieur de l'alésage formé sur l'étrier 10 et recevant la surface extérieure de la colonnette forment les deux surfaces de coulissement axial formé sur l'étrier et le support fixe respectivement, ce sont donc ces deux surfaces qui seront maintenues au contact par la réaction sur l'étrier du ressort 40. On remarquera également sur la Figure 7 que les éléments de friction et le support fixe coopèrent au moyen de surfaces planes et non plus arrondies, néanmoins ces surfaces planes telles que vues sur la partie droite de la Figure 7 sont maintenues au contact par le ressort 40 dans une position préférentielle pour éviter les bruits lors des applications de freinage. Comme on le voit, l'invention n'est pas limitée par la forme des zones d'ancrage et de coulissement des éléments de friction, ni par la forme des surfaces de coulissement entre le support fixe et l'étrier.

Dans les deux modes de réalisation représentés, la portion de montage 42 du ressort 40, du fait de sa forme en $\Omega$ , est encliquetable dans l'ouverture 44 de la voûte de l'étrier 10. Cette disposition donne une sécurité supplémentaire au bon fonctionnement du ressort, objet de l'invention.

Il est bien évident que l'invention n'est pas limitée aux modes de réalisation décrits, en particulier les portions élastiques 54 et 56 peuvent être pliées de manière différente en fonction de la forme des saillies avec lesquelles les portions rigides doivent coopérer, par exemple la saillie 80 peut ne pas exister et l'effort de la deuxième portion rigide peut être appliqué directement sur la surface 70 du côté périphérique des plaques support.

**Revendications**

1 - Ressort (40) pour frein à disque du type comportant un étrier (10) monté coulissant parallèlement à l'axe d'un disque tournant (30) sur un support fixe (12) au moyen d'au moins deux surfaces (16, 18) de coulissement axial, formées sur l'étrier (10) et sur le support fixe (12) et maintenues élastiquement en contact, et deux organes de friction (22, 24) reçus en ancrage et en coulissement axial dans une ouverture (34) dudit support fixe, pour venir en engagement de friction avec les faces opposées dudit disque lors de l'actionnement d'un moteur de frein (32), ledit ressort étant monté élastiquement dans une ouverture (44), formé dans la voûte de l'étrier et exerçant sur les plaques support (26, 28) desdits organes de friction (22, 24) un effort radial (R) dirigé sensiblement selon un rayon du disque (30) et en direction de l'axe de ce dernier et un effort tangentiel (T) perpendiculaire audit effort radial (R) pour solliciter chacun des organes de friction (22, 24) tangentiellement à la circonférence dudit disque pour assurer le maintien de ces derniers dans une position latérale préférentielle, ledit ressort (40) étant constitué d'une lame métallique pliée comportant une portion de montage (42) et des portions d'action, ledit ressort étant caractérisé en ce que la portion de montage est centrale et reliée élastiquement par ses côtés circonférentiellement espacés (46, 48) à deux portions d'action rigides (58, 60) une première portion rigide (58) s'étendant parallèlement à l'axe du disque (30) et étant susceptible de solliciter élastiquement par ses deux extrémités libres (62, 64), lesdites plaques support (26, 28) dans une direction sensiblement circonférentielle (T), une deuxième (60) desdites portions rigides (58, 60) s'étendant également parallèlement à l'axe du disque (30) et étant susceptible de solliciter élastiquement par ses deux extrémités libres (74, 76) lesdites plaques support (26, 28) sensiblement radialement (R) vers l'axe du disque.

2 - Ressort pour frein à disque selon la Revendication 1 caractérisé en ce que chacune desdites portions rigides (58, 60) est reliée élastiquement à ladite portion de montage (42) au travers d'une portion élastique (54, 56) qui lui est propre.

3 - Ressort pour frein à disque selon l'une des Revendications 1 ou 2, caractérisé en ce que chacune des portions rigides (58, 60) est susceptible de coopérer avec chacune des plaques support (26, 28) au travers de surfaces d'appui (66, 78) sur un côté périphérique (70) de chacune des plaques support (26, 28).

4 - Ressort selon la Revendication 3, caractérisé en ce que ladite première portion rigide (58) est susceptible de coopérer avec une surface d'appui (66) s'étendant sensiblement radialement à partir dudit côté périphérique (70) et formée sur un flan (66) d'une saillie (68) formée sur ledit côté périphérique.

5 - Ressort selon l'une des Revendications 3 ou 4, caractérisé en ce que la seconde portion rigide (60) est susceptible de coopérer avec une surface d'appui (78) s'étendant sensiblement circonférentiellement à partir dudit côté périphérique (70).

6 - Ressort selon l'une des Revendications 2 à 5 caractérisé en ce que chacune des portions élastiques (54, 56) est susceptible de venir partiellement en appui sur une surface correspondante (50, 52) de l'étrier (10) pour augmenter la raideur de ladite portion élastique (54, 56).

7 - Ressort selon l'une des Revendications précédentes, caractérisé en ce que la portion de montage a la forme générale en $\Omega$ encliquetable dans ladite ouverture (44) formée dans la voûte de l'étrier.

8 - Ressort selon la Revendication 7 caractérisé en ce que la portion de montage (42) est montée avec un jeu axial faible (J) dans une portion élargie circonférentiellement de ladite ouverture (44) immobilisant ainsi axialement ledit ressort (40) par rapport audit étrier (10).

9 - Ressort selon l'une des Revendications précédentes caractérisé en ce que chacune des portions rigides (58, 60) est conformée en gouttière, la surface extérieure de celle-ci (58, 60) étant susceptible d'être en appui sur lesdites surfaces d'appui (66, 78).

## Claims

1. Spring (40) for a disc brake of the type comprising a caliper (10) which is slideably mounted parallel to the axis of a rotating disc (30) on a stationary support (12) by means of at least two axially sliding surfaces (16, 18) which are formed on the caliper (10) and on the stationary support (12) and are elastically held in contact, and two friction components (22, 24) which are housed so as to be anchored and to slide axially in an opening (34) in the said stationary support, in order to come into frictional engagement with the opposing surfaces of the said disc during operation of a brake actuator (32), the said spring being mounted elastically in an opening (44) formed in the arch of the caliper and exerting a radial force (R) upon the support plates (26, 28) of the said friction components (22, 24), which is essentially directed along a radius of the disc (30) in the direction of the axis of the latter and a tangential force (T) which is perpendicular to the said radial force (R) so as to push each of the friction components (22, 24) tangentially to the circumference of the said disc to ensure that the latter are held in a preferential lateral position, the said spring (40) comprising a folded metal leaf including a mounting portion (42) and actuating portions, the said spring being characterized in that the mounting portion is central and joined elastically by its sides which are circumferentially spaced apart (46, 48) to two rigid actuating portions (58, 60) a first rigid portion (58) lying parallel to the axis of the disc (30) and being capable of pushing elastically by its two free ends (62, 64) the said support plates (26, 28) in a direction which is essentially circumferential (T), a second (60) of the said rigid portions (58, 60) also lying parallel to the axis of the disc (30) and being capable of pushing elastically by its two free ends (74, 76) the said support plates (26, 28) essentially radially (R) towards the axis of the disc.

2. Spring for a disc brake according to Claim 1, characterized in that each of the said rigid portions (58, 60) is joined elastically to the said mounting portion (42) through an elastic portion (54, 56) which is peculiar to it.

3. Spring for a disc brake according to one of Claims 1 or 2, characterized in that each of the rigid portions (58, 60) is capable of co-operating with each of the support plates (26, 28) through bearing surfaces (66, 78) on a peripheral side (70) of each of the support plates (26, 28).

4. Spring according to Claim 3, characterized in that the said first rigid portion (58) is capable of co-operating with a bearing surface (66) which extends essentially radially from the said peripheral side (70) and is formed on a side (66) of a projection (68) which is formed on the said peripheral side.

5. Spring according to one of Claims 3 or 4, characterized in that the second rigid portion (60) is capable of co-operating with a bearing surface (78) which extends essentially circumferentially from the said peripheral side (70).

6. Spring according to one of Claims 2 to 5, characterized in that each of the elastic portions (54, 56) is capable of partially coming to bear against a corresponding surface (50, 52) of the caliper (10) so as to increase the stiffness of the said elastic portion (54, 56).

7. Spring according to one of the preceding claims, characterized in that the mounting portion has the general shape of the letter $\Omega$ and may be ratcheted into the said opening (44) formed in the arch of the caliper.

8. Spring according to Claim 7, characterized in that the mounting portion (42) is mounted with a small axial clearance (J) in a portion of the said opening (44) which is enlarged circumferentially, thus immobilising axially the said spring (40) relative to the said caliper (10).

9. Spring according to one of the preceding claims, characterized in that each of the rigid portions (58, 60) is channel-shaped, the external surface of the latter (58, 60) being capable of bearing against the said bearing surfaces (66, 78).

## Patentansprüche

1. Feder (40) für eine Scheibenbremse vom Typ mit einem Sattel (10), der parallel zur Achse einer Drehscheibe (30) auf einem festen Träger (12) mittels wenigstens zweier Axialverschiebungsoberflächen (16, 18) verschiebbar angebracht ist, die auf dem Sattel (10) und auf dem festen Träger (12) ausgebildet sind und elastisch in Kontakt gehalten werden, und mit zwei Reibungsteilen (22, 24), die in einer Öffnung (34) dieses festen Trägers verankert und axial verschiebbar aufgenommen werden, um bei Betätigung eines Bremsmotors (32) mit den gegenüberliegenden Flächen dieser Scheibe in Reibungseingriff zu kommen, wobei diese Feder elastisch in eine in der Sattelwölbung gebildete Öffnung (44) eingebaut ist und auf die Trägerplatten (26, 28) dieser Reibungsteile (22, 24) eine etwa nach einem Radius der Scheibe (30) und in Richtung deren Achse ausgerichtete Radialkraft (R) und senkrecht zu dieser Radialkraft (R) eine Tangentialkraft (T) ausübt, um jedes dieser Reibungsteile (22, 24) tangential zum Umfang dieser Scheibe zu beaufschlagen, damit diese Teile in einer bevorzugten Seitenlage gehalten werden, wobei diese Feder (40) aus einem gebogenen Metallblatt besteht, das ein Montageteil (42) und Wirkteile umfaßt, wobei diese Feder dadurch gekennzeichnet ist, daß das Montageteil zentral liegt und elastisch mit seinen im Umfang abstehenden Seiten (46, 48) mit zwei starren Wirkteilen (58, 60) verbunden ist, und sich ein erstes starres Teil (58) parallel zur Achse der Scheibe (30) erstreckt und geeignet ist, mit seinen beiden freien äußersten Enden (62, 64) diese Trägerplatten (26, 28) in einer etwa im Umfang verlaufenden Richtung (T) elastisch zu beaufschlagen, wobei ein zweites (60) dieser starren Teile (58, 60) sich ebenfalls parallel zur Achse der Scheibe (30) erstreckt und geeignet ist, mit seinen beiden freien äußersten Enden (74, 76) diese Trägerplatten (26, 28) etwa radial (R) nach der Scheibenachse hin elastisch zu beaufschlagen.

2. Scheibenbremsenfeder nach Anspruch 1, dadurch gekennzeichnet, daß jedes dieser starren Teile (58, 60) elastisch mit diesem Montageteil (42) durch ein ihm eigenes elastisches Teil (54, 56) hindurch verbunden ist.

3. Scheibenbremsenfeder nach einem der Ansprüche 1 oder 2, dadurch gekennzeichnet, daß jedes der starren Teile (58, 60) dazu geeignet ist, mit jeder der Trägerplatten (26, 28) durch Auflageflächen (66, 78) hindurch auf einer Umfangsseite (70) von jeder der Trägerplatten (26, 28) zusammenzuwirken.

4. Feder nach Anspruch 3, dadurch gekennzeichnet, daß dieses erste starre Teil (58) dazu geeignet ist, mit einer Auflagefläche (66) zusammenzuwirken, die sich etwa radial von dieser Umfangsseite (70) aus erstreckt und auf einer Flanke (66) eines auf dieser Umfangsseite geformten Vorsprungs (68) gebildet ist.

5. Feder nach einem der Ansprüche 3 oder 4, dadurch gekennzeichnet, daß das zweite starre Teil (60) dazu geeignet ist, mit einer Auflagefläche (78) zusammenzuwirken, die sich etwa im Umfang von dieser Umfangsseite (70) aus erstreckt.

6. Feder nach einem der Ansprüche 2 bis 5, dadurch gekennzeichnet, daß jedes der elastischen Teile (54, 56) dazu geeignet ist, teilweise auf einer entsprechenden Oberfläche (50, 52) des Sattels (10) aufzuliegen, um die Steifheit dieses elastischens Teils (54, 56) zu erhöhen.

7. Feder nach einem der vorausgehenden Ansprüche, dadurch gekennzeichnet, daß das Montageteil die allgemeine Form eines $\Omega$ hat, das in diese in der Sattelwölbung gebildete Öffnung (44) einrastbar ist.

8. Feder nach Anspruch 7, dadurch gekennzeichnet, daß das Montageteil (42) mit einem schwachen axialen Spiel (J) in ein im Umfang erweitertes Teil dieser Öffnung (44) eingebaut ist und somit diese Feder (40) im Verhältnis zu diesem Bügel (10) axial unbeweglich macht.

9. Feder nach einem der vorausgehenden Ansprüche, dadurch gekennzeichnet, daß jedes der starren Teile (58, 60) rinnenförmig ausgebildet ist, wobei die Außenfläche derselben (58, 60) dazu geeignet ist, auf diesen Auflageflächen (66, 78) aufzuliegen.

FIG-1

FIG-2

FIG-3

FIG-4

FIG-5

FIG-6

FIG-7